# NEW EUROPEAN PATENT SPECIFICATION

(11) **EP 2 225 822 B2**
(45) Date of publication and mention of the opposition decision: **13.07.2022**
(45) Mention of the grant of the patent: 01.08.2012
(21) Application number: 08854373.1
(22) Date of filing: 21.11.2008
(51) Int. Cl.: H02M 1/42

(54) **CONTROL SYSTEM AND METHOD FOR CONTROLLING A BRIDGELESS BOOST CONVERTER**
SYSTEM UND VERFAHREN ZUR STEUERUNG EINES BRÜCKENLOSEN AUFWÄRTSWANDLERS
SYSTÈME DE COMMANDE ET PROCÉDÉ DE COMMANDE D'UN CONVERTISSEUR-ÉLÉVATEUR DE TENSION SANS PONT

(30) Priority: 29.11.2007 GB 0723402; 29.11.2007 US 990923 P
(43) Date of publication of application: 08.09.2010
(73) Proprietor: Eltek Valere AS, 3003 Drammen (NO)
(72) Inventor: MYHRE, Erik, N-1385 Asker (NO)
(74) Representative: Onsagers AS
(86) International application number: PCT/NO2008/000415
(87) International publication number: WO 2009/070031

(56) References cited:
- US-A- 4 412 277
- US-A1- 2006 198 172
- US-A1- 2006 220 628
- LU B ET AL: "Bridgeless PFC implementation using one cycle control technique" APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, vol. 2, 6 March 2005 (2005-03-06), pages 812-817Vol.2, XP010809329 ISBN: 978-0-7803-8975-5
- Lu B: "Investigation of High-density Integrated Solution for AC/DC Conversion of a Distributed Power System", dissertation submitted to the faculty of the Virginia Polytechnic Institute and State University, May 5, 2006
- LU B ET AL: "Bridgeless PFC implementation using one cycle control technique", APPLIED POWER ELECTRONICSCONFERENCE AND EXPOSITION, 2005. APEC 2005
- DE SOUZA A F ET AL: "High power factor rectifier with reduced conduction and commutation losses", TELECOMMUNICATIONENERGY CONFERENCE, 1999
- INTELEC ?99. THE 21 ST INTERNATIONAL COPENHAGEN

## Description

### FIELD OF THE INVENTION

The present invention relates to a control system and method for controlling a bridgeless boost converter.

### PRIOR ART

Several types of converters are known for use in power supply systems, where there is a need to convert an AC power to a controlled DC power. The AC power will usually be supplied from an AC power source, such as the mains. The DC power is supplied to equipment such as telecommunication equipment, broad band data communication equipment, military equipment, medical equipment etc.

The requirements for the DC power can vary, but usually it is important to keep the DC voltage within certain boundaries and also to protect the DC side from irregularities in the voltage/current on the AC side.

Several such converters are known. For example is a boost converter shown and described in "Power Electronics: converters, applications, and design", 2nd ed., by Mohan, Undeland and Robbins in chapter 7-4.

US 2006/220628 describes a circuit and method for improving current sensing in a bridgeless PFC boost converter. Current transformers are used as current sensors.

LU B ET AL: "Bridgeless PFC implementation using one cycle control technique" APPLIED POWER ELECTRONICS CONFERENCE AND EXPOSITION, APEC 2005, AUSTIN,TX, USA 6-10 MARCH 2005, PISCATAWAY, NJ, USA, IEEE, vol. 2, 6 March 2005, pages 812-817, describes an implementation of a bridgeless boost converter. US 2006/198172 A1 describes a another bridgeless boost converter with PFC circuit.

US-A-4 412 277 describes an AC/DC converter and control of the converter by means of a control signal.

Power supply systems commonly used today have a power efficiency of about 88 - 92%, depending on several issues such as deviation from nominal operating ranges, configurations, field of use etc. Due to environmental issues and also increasing energy costs, there is an increased demand for power supply systems with improved power efficiency.

The control system controls the switches in power supply system based on parameters such as measurements of voltage and current values in the power supply system. The operation of the control system has a large influence on the total performance of the power supply system.

In a bridgeless boost converter, it is a challenge to measure the AC input current in a cost-efficient way. The reason for measuring the AC input current is to be able to control the AC input current so that it has substantially the same phase and the same wave shape as the AC input voltage.

The object of the invention is to provide a control system and method for controlling a bridgeless boost converter. More specifically, it is an object to provide a control system and method for controlling the input current phase and wave shape of a bridgeless boost converter.

### SUMMARY OF THE INVENTION

The present invention relates to a control system according to claim 1.

In one aspect, the first measuring unit is a first resistor, the second measuring unit is a second resistor and the third measuring unit is a third resistor.

In one aspect, the first value is measured as the first current through the first resistor, the second value is measured as the second current through the second resistor, the third value is measured as the third current through the third resistor, where the measured signal uₚ is computed as the maximum value of either the current through the first resistor plus the current through the third resistor or the current through the second resistor plus the current through the third resistor.

In one aspect, the first value is measured as the voltage V_{Rs1} over a first resistor, the second value is measured as the voltage over a second resistor, and the third value is measured as the voltage over a third resistor, where the measured signal uₚ is computed as the maximum value of either the sum with opposite sign of the voltage through the first resistor and the voltage through the third resistor or the sum with opposite sign of the voltage through the second resistor and the voltage through the third resistor.

In one aspect, the reference signal is provided as a full-wave rectified representation of the input voltage Vac by means of a full bridge rectifier.

The invention also relates to a method according to claim 6.

In one aspect, the first value is measured as the first current I_{Rs1} through a first resistor, the second value is measured as the second current I_{Rs2} through a second resistor, the third value is measured as the third current I_{Rs3} through a third resistor, where the measured signal uₚ is computed as the maximum value of either the current through the first resistor plus the current through the third resistor or the current through the second resistor plus the current through the third resistor.

In one aspect, the first value is measured as the voltage V_{Rs1} over a first resistor, the second value is measured as the voltage V_{Rs2} over a second resistor, and the third value is measured as the voltage V_{Rs3} over a third resistor, where the measured signal uₚ is computed as the maximum value of either the sum with opposite sign of the voltage through the first resistor and the voltage through the third resistor or the sum with opposite sign of the voltage through the second resistor and the voltage through the third resistor.

In one aspect, the reference signal is provided as a full-wave rectified representation of the input voltage Vac by means of a full bridge rectifier.

### DETAILED DESCRIPTION

Embodiments of the invention will now be described with reference to the enclosed drawings, where:
Fig. 1 illustrates a first embodiment of the boost converter with measuring elements;
Fig. 2 illustrates a second embodiment of the boost converter with measuring elements;
Fig. 3 illustrates the current flow of the embodiment in fig. 2 during a positive AC input voltage half-period in the ON stage;
Fig. 4 illustrates the current flow of the embodiment in fig. 2 during a positive AC input voltage half-period in the OFF stage;
Fig. 5 illustrates a block diagram of the control system and input signals;
Fig. 6 illustrate the computation of the signal Up that is inputted to the control system, where the signal is based on current measurements; and
Fig. 7 illustrates the computation of the signal Up that is inputted to the control system, where the signal is based on voltage measurements.

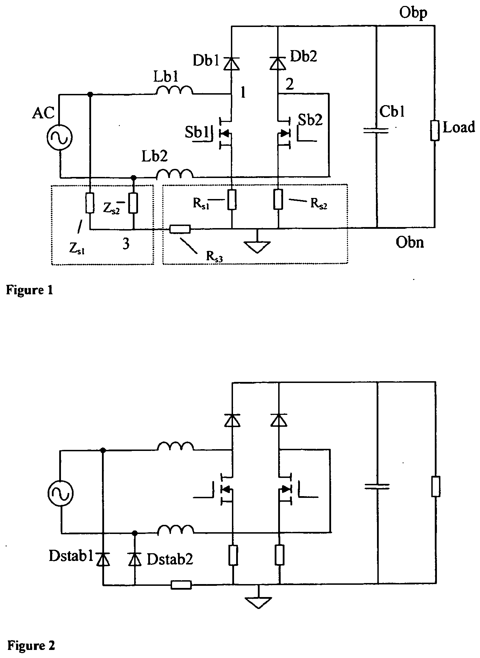

It is now referred to fig. 1. A bridgeless boost converter comprises a first boost inductor L1 connected between a first AC input terminal and a first node 1 and a second boost inductor L2 connected between a second AC input terminal and a second node 2.

A first boost diode Db1 is connected between the first node 1 and the positive output terminal Obp and a second boost diode Db2 is connected between the second node 2 and the positive output terminal Obp.

A first boost switch Sb1 is connected in series with a first measuring unit, for example a first measuring resistor Rs1, between the first node 1 and a negative output terminal Obn.

A second boost switch Sb2 is connected in series with a second measuring unit, for example a second measuring resistor Rs2, between the second node 2 and the negative output terminal Obn.

A capacitor Cb is connected between the positive output terminal Obp and the negative output terminal Obn.

A third measuring unit, for example a third measuring resistor Rs3, is connected between the negative output terminal Obn and a third node 3. The first, second and third measuring units form a measuring system, indicated by a dotted rectangle in fig. 1.

A stabilization system indicated by a dotted rectangle in fig. 1 comprises a first impedance Zs1 connected between the third node 3 and the first AC input terminal and a second impedance Zs2 connected between the third node 3 and the second AC input terminal.

In an alternative embodiment of the stabilization system, shown in fig. 2, the stabilization system comprises a first stabilization diode Dstab1 connected between the third node 3 and the first AC input terminal and a second stabilization diode connected between the third node 3 and the second AC input terminal.

The function of the stabilization system is described in detail in the co-pending patent application GB 0721420.8 and GB 0721413.3.

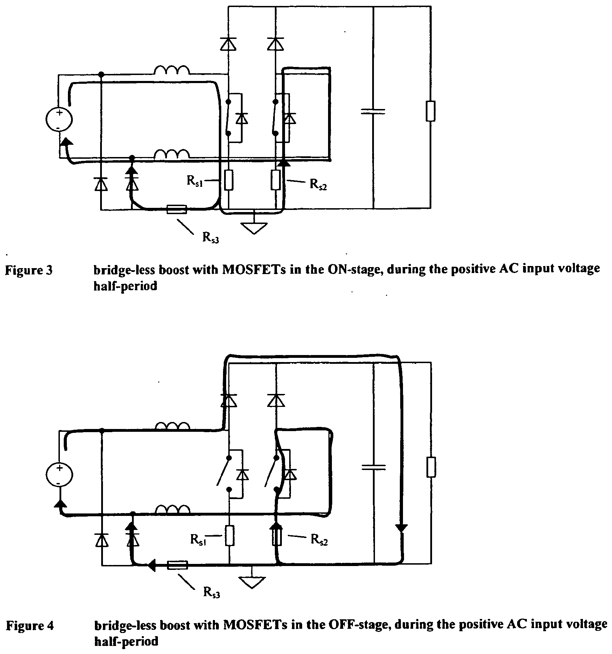

In fig. 3 and fig. 4 it is shown how the current is flowing during a positive AC input voltage half period when the switches are in ON state and in OFF state respectively. As shown, the switches are MOSFETs with intrinsic diodes. Alternatively, the switches are other types of switches with intrinsic diodes or switches connected in parallel with anti-parallel diodes. An example of alternative switches is IGBTs connected in parallel with anti-parallel diodes.

As shown in fig. 3 and fig. 4, the first measuring unit is measuring a value representing the current through the first switch Sb1, while the second measuring unit is measuring a value representing the current through the second switch Sb2. Moreover, the third measuring unit is measuring a value representing the sum of the currents through the components of the stabilization system.

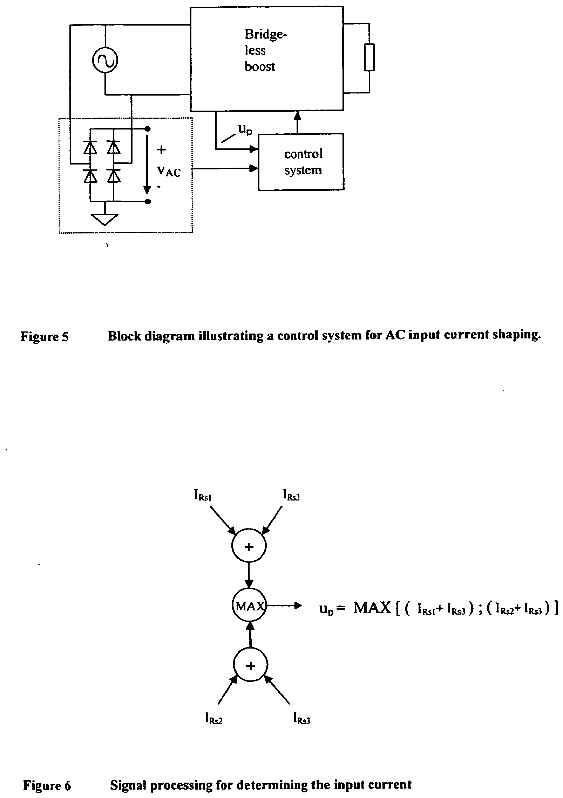

As illustrated in fig. 5, the measurements from the first, second and third measuring units are inputted to a control system, illustrated by the input signal uₚ. The input signal uₚ is computed as uₚ = MAX [(I_{Rs1}+ I_{Rs3}) ; (I_{Rs2}+ I_{Rs3})], that is as the maximum value of either the current I_{Rs1} through the first resistor Rs1 plus the current I_{Rs3} through the third resistor Rs3 or the current I_{Rs2} through the second resistor Rs2 plus the current I_{Rs3} through the third resistor Rs3. The computation of the input signal uₚ is shown in fig. 6. Of course, the elements for computing the input signal up would normally be regarded as a part of the control system, i.e. the signals from the respective measuring units would be direct input to the control system.

The voltage Vac is also inputted to the control system, as illustrated in fig. 5. The voltage Vac is measured by means of a diode bridge, i.e. the only positive values of the voltage Vac is inputted to the control system.

The control system is providing control signals to turn the switches Sb1 and Sb2 ON and OFF. The measurements above, i.e. the signal uₚ and Vac, is used by the control system to control the switches so that the AC current is substantially in phase with the AC voltage and/or has the same wave shape as the AC input voltage, a common requirement for converters. The voltage Vac is then used as a reference value and the input signal uₚ is the measured value, where the control system controls the switches so that the input signal uₚ should be substantially equal to the reference value.

In addition, there is another control system modulating the amplitude of the input AC current in order to provide a correct output voltage level, that is the voltage difference between the positive output terminal Obp and the negative output terminal Obn. This principle is known for a man skilled in the art, and will not be described further here.

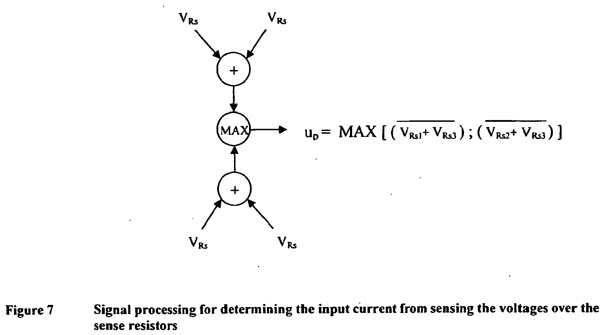

In an alternative embodiment, the input signal uₚ can be computed by means of the voltages V_{Rs1}, V_{Rs2}, V_{Rs3} over the respective resistors Rs1, Rs2, Rs3 rather than the current through them. This is illustrated in fig. 7. As illustrated, the measurements from the first, second and third measuring units are inputted to a control system, illustrated by the input signal uₚ. The input signal uₚ is computed as up = MAX [(VRs1 + VRs3), (VRs2 + VRs3)], that is as the maximum value of either the sum with opposite sign of the voltage V_{Rs1} through the first resistor Rs1 and the voltage V_{Rs3} through the third resistor Rs3 or the sum with opposite sign of the voltage V_{Rs2} through the second resistor Rs2 and the voltage V_{Rs3} through the third resistor Rs3.

Further modifications and variations will be obvious for a skilled man when reading the description above, the scope of the invention being defined by the following claims.

## Claims

1. Control system for controlling a bridgeless boost converter, comprising:
- a first measuring unit measuring a first value representing a first current through a first boost switch (Sb1) of the bridgeless boost converter;
- a second measuring unit measuring a second value representing a second current through a second boost switch (Sb2) of the bridgeless boost converter;
- a third current measuring unit measuring a third value representing a third current representing the sum of the currents through the components of a stabilization system, where the stabilization system comprises:
- a first impedance (Zs1) connected between a third node (3) and a first AC input terminal and a second impedance (Zs2) connected between the third node (3) and a second AC input terminal, or
- a first stabilization diode (Dstab1) connected between the third node (3) and the first AC input terminal and a second stabilization diode (Dstab2) connected between the third node (3) and the second AC input terminal;
where a measured signal uₚ is computed by means of the first, second and third currents, where a reference signal representing the input voltage Vac is formed, and
where the measured signal uₚ and the reference signal representing the input voltage Vac are input to the control system for controlling the switches (Sb1, Sb2) so that the measured signal uₚ is substantially in phase with the reference signal representing the input voltage Vac, the third measuring unit being connected between a negative output terminal (Obn) and the third node (3).

2. System according to claim 1, where the first measuring unit is a first resistor (Rs1), the second measuring unit is a second resistor (Rs2) and the third measuring unit is a third resistor (Rs3).

3. System according to claim 2, where the first value is measured as the first current (I_{Rs1}) through the first resistor (Rs1), the second value is measured as the second current (I_{Rs2}) through the second resistor (Rs2), the third value is measured as the third current (I_{Rs3}) through the third resistor (Rs3), where the measured signal uₚ is computed as the maximum value of either the current (I_{Rs1}) through the first resistor (Rs1) plus the current (I_{Rs3}) through the third resistor (Rs3) or the current (I_{Rs2}) through the second resistor (Rs2) plus the current (I_{Rs3}) through the third resistor (Rs3) .

4. System according to claim 2, where the first value is measured as the voltage V_{Rs1} over a first resistor (Rs1), the second value is measured as the voltage (V_{Rs2}) over a second resistor (Rs2), and the third value is measured as the voltage (V_{Rs3}) over a third resistor (Rs3), where the measured signal uₚ is computed as the maximum value of either the sum with opposite sign of the voltage (V_{Rs1}) through the first resistor (Rs1) and the voltage (V_{Rs3}) through the third resistor (Rs3) or the sum with opposite sign of the voltage (V_{Rs2}) through the second resistor (Rs2) and the voltage (V_{Rs3}) through the third resistor (Rs3).

5. System according to any of claims 1-4, where the reference signal is provided as a full-wave rectified representation of the input voltage Vac by means of a full bridge rectifier.

6. Method for controlling a bridgeless boost converter, comprising:
- measuring a first value representing the current through a first boost switch (Sb1) of the bridgeless boost converter;
- measuring a second value representing the current through the second boost switch (Sb2) of the bridgeless boost converter;
- using a measuring unit being connected between a negative output terminal (Obn) and a third node (3), measuring a third value representing a third current representing the sum of the currents through the components of a stabilization system, where the stabilization system comprises:
- a first impedance (Zs1) connected between the third node (3) and a first AC input terminal and a second impedance (Zs2) connected between the third node (3) and a second AC input terminal, or
- a first stabilization diode (Dstab1) connected between the third node (3) and the first AC input terminal and a second stabilization diode (Dstab2) connected between the third node (3) and the second AC input terminal;
- computing a measured signal uₚ by means of the first, second and third currents,
- forming a reference signal representing the input voltage Vac,
- inputting the measured signal uₚ and the reference signal to the control system for controlling the switches (Sb1, Sb2) so that the measured signal uₚ is substantially in phase with the reference signal representing the input voltage Vac.

7. Method according to claim 6, where the first value is measured as the first current I_{Rs1} through a first resistor (Rs1), the second value is measured as the second current I_{Rs2} through a second resistor (Rs2), the third value is measured as the third current I_{Rs3} through a third resistor (Rs3), where the measured signal uₚ is computed as the maximum value of either the current (I_{Rs1}) through the first resistor (Rs1) plus the current (I_{Rs3}) through the third resistor (Rs3) or the current (I_{Rs2}) through the second resistor (Rs2) plus the current (I_{Rs3}) through the third resistor (Rs3).

8. Method according to claim 6, where the first value is measured as the voltage V_{Rs1} over a first resistor (Rs1), the second value is measured as the voltage V_{Rs2} over a second resistor (Rs2), and the third value is measured as the voltage V_{Rs3} over a third resistor (Rs3), where the measured signal uₚ is computed as the maximum value of either the sum with opposite sign of the voltage (V_{Rs1}) through the first resistor (Rs1) and the voltage (V_{Rs3}) through the third resistor (Rs3) or the sum with opposite sign of the voltage (V_{Rs2}) through the second resistor (Rs2) and the voltage (V_{Rs3}) through the third resistor (Rs3).

9. Method according to any of claims 6 - 8, where the reference signal is provided as a full-wave rectified representation of the input voltage Vac by means of a full bridge rectifier.

## Patentansprüche

1. Steuersystem zur Steuerung eines brückenlosen Aufwärtswandlers, umfassend:
- eine erste Messeinheit, die einen ersten Wert misst, der einen ersten Strom durch einen ersten Aufwärtsschalter (Sb1) des brückenlosen Aufwärtswandlers darstellt;
- eine zweite Messeinheit, die einen zweiten Wert misst, der einen zweiten Strom durch einen zweiten Aufwärtsschalter (Sb2) des brückenlosen Aufwärtswandlers darstellt;
- eine dritte Strommesseinheit, die einen dritten Wert misst, der einen dritten Strom darstellt, der die Summe aus den Strömen durch die Komponenten eines Stabilisierungssystems darstellt, wobei das Stabilisierungssystem Folgendes umfasst:
- eine erste Impedanz (Zs1), die zwischen einem dritten Knoten (3) und einem ersten AC-Eingangsanschluss angeschlossen ist, und eine zweite Impedanz (Zs2), die zwischen dem dritten Knoten (3) und einem zweiten AC-Eingangsanschluss angeschlossen ist, oder
- eine erste Stabilisierungsdiode (Dstab1), die zwischen dem dritten Knoten (3) und dem ersten AC-Eingangsanschluss angeschlossen ist, und eine zweite Stabilisierungsdiode (Dstab2), die zwischen dem dritten Knoten (3) und dem zweiten AC-Eingangsanschluss angeschlossen ist;
wobei ein gemessenes Signal uₚ mithilfe des ersten, zweiten und dritten Stroms berechnet wird,
wobei ein Referenzsignal gebildet wird, das die Eingangsspannung Vac darstellt, und wobei das gemessene Signal uₚ und das Referenzsignal, das die Eingangsspannung Vac darstellt, zum Steuern der Schalter (Sb1, Sb2) in das Steuersystem eingegeben werden, sodass das gemessene Signal uₚ im Wesentlichen phasengleich mit dem Referenzsignal ist, das die Eingangsspannung Vac darstellt, wobei die dritte Messeinheit zwischen einem negativen Ausgangsanschluss (Obn) und dem dritten Knoten (3) angeschlossen ist.

2. System nach Anspruch 1, wobei die erste Messeinheit ein erster Widerstand (Rs1) ist, die zweite Messeinheit ein zweiter Widerstand (Rs2) ist und die dritte Messeinheit ein dritter Widerstand (Rs3) ist.

3. System nach Anspruch 2, wobei der erste Wert als der erste Strom (I_{Rs1}) durch den ersten Widerstand (Rs1) gemessen wird, der zweite Wert als der zweite Strom (I_{Rs2}) durch den zweiten Widerstand (Rs2) gemessen wird, der dritte Wert als der dritte Strom (I_{Rs3}) durch den dritten Widerstand (Rs3) gemessen wird, und wobei das gemessene Signal uₚ als der Maximalwert von entweder dem Strom (I_{Rs1}) durch den ersten Widerstand (Rs1) plus dem Strom (I_{Rs3}) durch den dritten Widerstand (Rs3) oder dem Strom (I_{Rs2}) durch den zweiten Widerstand (Rs2) plus dem Strom (I_{Rs3}) durch den dritten Widerstand (Rs3) berechnet wird.

4. System nach Anspruch 2, wobei der erste Wert als die Spannung V_{Rs1} über einen ersten Widerstand (Rs1) gemessen wird, der zweite Wert als die Spannung (V_{Rs2}) über einen zweiten Widerstand (Rs2) gemessen wird und der dritte Wert als die Spannung (V_{Rs3}) über einen dritten Widerstand (Rs3) gemessen wird, wobei das gemessene Signal uₚ als der Maximalwert von entweder der Summe aus der Spannung (V_{Rs1}) durch den ersten Widerstand (Rs1) und der Spannung (V_{Rs3}) durch den dritten Widerstand (Rs3) mit umgekehrtem Vorzeichen oder der Summe aus der Spannung (V_{Rs2}) durch den zweiten Widerstand (Rs2) und der Spannung (V_{Rs3}) durch den dritten Widerstand (Rs3) mit umgekehrtem Vorzeichen berechnet wird.

5. System nach einem der Ansprüche 1-4, wobei das Referenzsignal mithilfe eines Vollbrückengleichrichters als vollwellengleichgerichtete Darstellung der Eingangsspannung Vac bereitgestellt wird.

6. Verfahren zur Steuerung eines brückenlosen Aufwärtswandlers, umfassend:
- Messen eines ersten Wertes, der den Strom durch einen ersten Aufwärtsschalter (Sb1) des brückenlosen Aufwärtswandlers darstellt;
- Messen eines zweiten Wertes, den Strom durch den zweiten Aufwärtsschalter (Sb2) des brückenlosen Aufwärtswandlers darstellt;
- Verwenden einer Messeinheit, die zwischen einem negativen Ausgangsanschluss (Obn) und einem dritten Knoten (3) angeschlossen ist und die einen dritten Wert misst, der einen dritten Strom darstellt, der die Summe aus den Strömen durch die Komponenten eines Stabilisierungssystems darstellt, wobei das Stabilisierungssystem Folgendes umfasst:
- eine erste Impedanz (Zs1), die zwischen dem dritten Knoten (3) und einem ersten AC-Eingangsanschluss angeschlossen ist, und eine zweite Impedanz (Zs2), die zwischen dem dritten Knoten (3) und einem zweiten AC-Eingangsanschluss angeschlossen ist, oder
- eine erste Stabilisierungsdiode (Dstab1), die zwischen dem dritten Knoten (3) und dem ersten AC-Eingangsanschluss angeschlossen ist, und eine zweite Stabilisierungsdiode (Dstab2), die zwischen dem dritten Knoten (3) und dem zweiten AC-Eingangsanschluss angeschlossen ist;
- Berechnen eines gemessenen Signals uₚ mithilfe des ersten, zweiten und dritten Stroms,
- Bilden eines Referenzsignals, das die Eingangsspannung Vac darstellt,
- Eingeben des gemessenen Signals uₚ und des Referenzsignals in das Steuersystem zum Steuern der Schalter (Sb1, Sb2), sodass das gemessene Signal uₚ im Wesentlichen phasengleich mit dem Referenzsignal ist, das die Eingangsspannung Vac darstellt.

7. Verfahren nach Anspruch 6, wobei der erste Wert als der erste Strom I_{Rs1} durch einen ersten Widerstand (Rs1) gemessen wird, der zweite Wert als der zweite Strom I_{Rs2} durch einen zweiten Widerstand (Rs2) gemessen wird, der dritte Wert als der dritte Strom I_{Rs3} durch einen dritten Widerstand (Rs3) gemessen wird, und wobei das gemessene Signal uₚ als der Maximalwert von entweder dem Strom (I_{Rs1}) durch den ersten Widerstand (Rs1) plus dem Strom (I_{Rs3}) durch den dritten Widerstand (Rs3) oder dem Strom (I_{Rs2}) durch den zweiten Widerstand (Rs2) plus dem Strom (I_{Rs3}) durch den dritten Widerstand (Rs3) berechnet wird.

8. Verfahren nach Anspruch 6, wobei der erste Wert als die Spannung V_{Rs1} über einen ersten Widerstand (Rs1) gemessen wird, der zweite Wert als die Spannung V_{Rs2} über einen zweiten Widerstand (Rs2) gemessen wird und der dritte Wert als die Spannung V_{Rs3} über einen dritten Widerstand (Rs3) gemessen wird, wobei das gemessene Signal uₚ als der Maximalwert von entweder der Summe aus der Spannung (V_{Rs1}) durch den ersten Widerstand (Rs1) und der Spannung (V_{Rs3}) durch den dritten Widerstand (Rs3) mit umgekehrtem Vorzeichen oder der Summe aus der Spannung (V_{Rs2}) durch den zweiten Widerstand (Rs2) und der Spannung (V_{Rs3}) durch den dritten Widerstand (Rs3) mit umgekehrtem Vorzeichen berechnet wird.

9. Verfahren nach einem der Ansprüche 6-8, wobei das Referenzsignal mithilfe eines Vollbrückengleichrichters als vollwellengleichgerichtete Darstellung der Eingangsspannung Vac bereitgestellt wird.

## Revendications

1. Système de commande pour commander un convertisseur-élévateur de tension sans pont, comprenant :
- une première unité de mesure mesurant une première valeur représentant un premier courant à travers un premier commutateur-élévateur de tension (Sb1) du convertisseur-élévateur de tension sans pont ;
- une deuxième unité de mesure mesurant une deuxième valeur représentant un deuxième courant à travers un deuxième commutateur-élévateur de tension (Sb2) du convertisseur-élévateur de tension sans pont ;
- une troisième unité de mesure de courant mesurant une troisième valeur représentant un troisième courant représentant la somme des courants à travers les composants d'un système de stabilisation, où le système de stabilisation comprend :
- une première impédance (Zs1) connectée entre un troisième nœud (3) et une première borne d'entrée de courant alternatif et une deuxième impédance (Zs2) connectée entre le troisième nœud (3) et une deuxième borne d'entrée de courant alternatif, ou
- une première diode de stabilisation (Dstab1) connectée entre le troisième nœud (3) et la première borne d'entrée de courant alternatif et une deuxième diode de stabilisation (Dstab2) connectée entre le troisième nœud (3) et la deuxième borne d'entrée de courant alternatif;
dans lequel un signal mesuré uₚ est calculé au moyen des premier, deuxième et troisième courants, dans lequel un signal de référence représentant la tension d'entrée Vac est formé, et dans lequel le signal mesuré uₚ et le signal de référence représentant la tension d'entrée Vac sont entrés dans le système de commande pour commander les commutateurs (Sb1, Sb2) de sorte que le signal mesuré uₚ soit sensiblement en phase avec le signal de référence représentant la tension d'entrée Vac, la troisième unité de mesure étant connectée entre une borne de sortie négative (Obn) et le troisième nœud (3).

2. Système selon la revendication 1, dans lequel la première unité de mesure est une première résistance (Rs1), la deuxième unité de mesure est une deuxième résistance (Rs2) et la troisième unité de mesure est une troisième résistance (Rs3).

3. Système selon la revendication 2, dans lequel la première valeur est mesurée comme le premier courant (I_{Rs1}) à travers la première résistance (Rs1), la deuxième valeur est mesurée comme le deuxième courant (I_{Rs2}) à travers la deuxième résistance (Rs2), la troisième valeur est mesurée comme le troisième courant (I_{Rs3}) à travers la troisième résistance (Rs3), dans lequel le signal mesuré uₚ est calculé comme la valeur maximale, soit du courant (I_{Rs1}) à travers la première résistance (Rs1) plus le courant (I_{Rs3}) à travers la troisième résistance (Rs3), soit du courant (I_{Rs2}) à travers la deuxième résistance (Rs2) plus le courant (I_{Rs3}) à travers la troisième résistance (Rs3).

4. Système selon la revendication 2, dans lequel la première valeur est mesurée comme la tension (V_{Rs1}) sur une première résistance (Rs1), la deuxième valeur est mesurée comme la tension (V_{Rs2}) sur une deuxième résistance (Rs2), et la troisième valeur est mesurée comme la tension (V_{Rs3}) sur une troisième résistance (Rs3), dans lequel le signal mesuré uₚ est calculé comme la valeur maximale, soit de la somme de signe opposé de la tension (V_{Rs1}) à travers la première résistance (Rs1) et de la tension (V_{Rs3}) à travers la troisième résistance (Rs3), soit de la somme de signe opposé de la tension (V_{Rs2}) à travers la deuxième résistance (Rs2) et de la tension (V_{Rs3}) à travers la troisième résistance (Rs3).

5. Système selon l'une quelconque des revendications 1 à 4, dans lequel le signal de référence est fourni comme une représentation redressée pleine onde de la tension d'entrée Vac au moyen d'un redresseur en pont complet.

6. Procédé pour commander un convertisseur-élévateur de tension sans pont, comprenant :
- la mesure d'une première valeur représentant le courant à travers un premier commutateur-élévateur de tension (Sb1) du convertisseur-élévateur de tension sans pont ;
- la mesure d'une deuxième valeur représentant le courant à travers le deuxième commutateur-élévateur de tension (Sb2) du convertisseur-élévateur de tension sans pont ;
- l'utilisation d'une unité de mesure qui est connectée entre une borne de sortie négative (Obn) et un troisième nœud (3), la mesure d'une troisième valeur représentant un troisième courant représentant la somme des courants à travers les composants d'un système de stabilisation, où le système de stabilisation comprend :
- une première impédance (Zs1) connectée entre un troisième nœud (3) et une première borne d'entrée de courant alternatif et une deuxième impédance (Zs2) connectée entre le troisième nœud (3) et une deuxième borne d'entrée de courant alternatif, ou
- une première diode de stabilisation (Dstab1) connectée entre le troisième nœud (3) et la première borne d'entrée de courant alternatif et une deuxième diode de stabilisation (Dstab2) connectée entre le troisième nœud (3) et la deuxième borne d'entrée de courant alternatif ;
- le calcul d'un signal mesuré uₚ au moyen des premier, deuxième et troisième courants,
- la formation d'un signal de référence représentant la tension d'entrée Vac,
- l'entrée du signal mesuré uₚ et du signal de référence dans le système de commande pour commander les commutateurs (Sb1, Sb2) de sorte que le signal mesuré uₚ soit sensiblement en phase avec le signal de référence représentant la tension d'entrée Vac.

7. Procédé selon la revendication 6, dans lequel la première valeur est mesurée comme le premier courant (I_{Rs1}) à travers une première résistance (Rs1), la deuxième valeur est mesurée comme le deuxième courant (I_{Rs2}) à travers une deuxième résistance (Rs2), la troisième valeur est mesurée comme le troisième courant (I_{Rs3}) à travers une troisième résistance (Rs3), dans lequel le signal mesuré uₚ est calculé comme la valeur maximale, soit du courant (I_{Rs1}) à travers la première résistance (Rs1) plus le courant (I_{rS3}) à travers la troisième résistance (Rs3), soit du courant (I_{Rs2}) à travers la deuxième résistance (Rs2) plus le courant (I_{Rs3}) à travers la troisième résistance (Rs3).

8. Procédé selon la revendication 6, dans lequel la première valeur est mesurée comme la tension (V_{Rs1}) sur une première résistance (Rs1), la deuxième valeur est mesurée comme la tension (V_{Rs2}) sur une deuxième résistance (Rs2), et la troisième valeur est mesurée comme la tension (V_{Rs3}) sur une troisième résistance (Rs3), dans lequel le signal mesuré up est calculé comme la valeur maximale, soit de la somme de signe opposé de la tension (V_{Rs1}) à travers la première résistance (Rs1) et de la tension (V_{Rs3}) à travers la troisième résistance (Rs3), soit de la somme de signe opposé de la tension (V_{Rs2}) à travers la deuxième résistance (Rs2) et de la tension (V_{Rs3}) à travers la troisième résistance (Rs3).

9. Procédé selon l'une quelconque des revendications 6 à 8, dans lequel le signal de référence est fourni comme une représentation redressée pleine onde de la tension d'entrée Vac au moyen d'un redresseur en pont complet.
